# EUROPEAN PATENT APPLICATION

(11) **EP 4 603 824 A1**
(43) Date of publication of application: **20.08.2025**
(21) Application number: 24218299.6
(22) Date of filing: 09.12.2024
(51) Int. Cl.: G01N 21/75, G01N 21/85, G01N 21/31, G01N 21/27, G01N 21/64, G01N 21/05, G01N 21/77

(54) **MEASUREMENT DEVICE AND MEASUREMENT METHOD**

(30) Priority: 19.02.2024 JP 2024022622
(71) Applicant: Yokogawa Electric Corporation, Tokyo 180-8750 (JP)
(72) Inventor: OGAWA, Jun-Ichi, Musashino-shi, Tokyo, 180-8750 (JP)
(74) Representative: Hoffmann Eitle

(57) **Abstract**

[Solution] There is provided a measurement device including a flow channel which includes a main inlet and a main outlet; a pump which supplies a fluid containing a radical precursor to the main inlet of the flow channel; a radical generation unit which generates a radical from the radical precursor in a radical generation region in the flow channel; and a measurement unit which measures a measurement value depending on a concentration of the radical at at least one measurement position which exists toward the main outlet relative to the radical generation region in the flow channel. In the measurement device described above, the radical generation unit may generate the radical by applying at least one of a voltage, heat, light, or an electron beam to the fluid containing the radical precursor.

## Description

### BACKGROUND

### 1. TECHNICAL FIELD

The present invention relates to a measurement device and a measurement method.

### 2. RELATED ART

Patent Document 1 describes "a device which irradiates a sample photo-excited by being irradiated by pulse light with probe light, and observes a transient absorption spectrum or its change by detecting a change in intensity of the probe light with a streak camera" in claim 1.

Patent Document 2 describes, in paragraph 0010, "the present invention is a device which measures a transient absorption of a substance, including an excitation light source which emits excitation light for exciting the substance; a probe light source which emits probe light as steady light to a sample including the substance being excited by the excitation light; a spectroscopic means which performs spectroscopy for transmitted probe light transmitted through the sample and outputs it as output light; and a light detection means which detects the output light, wherein the light detection means includes an avalanche photodiode, or APD".

Patent Document 3 describes, in paragraph 0007, "an optical measurement device according to several embodiments includes a first irradiation unit which irradiates one first irradiation region on a movement path of a moving sample with excitation light, a second irradiation unit which irradiates a second irradiation region positioned on the movement path toward a movement direction of the sample relative to the one first irradiation region with probe light, a detection unit which detects the probe light irradiated to the sample by the second irradiation unit, and a control unit, which calculates, based on detected intensity of the probe light transmitted through the sample at each of a plurality of moments different from each other during a course of a transient response of an optical parameter of the sample resulting from being excited by the excitation light and detected at a different timing by the detection unit, the optical parameter at the plurality of moments, and calculates a physical property parameter of the sample based on the calculated optical parameter."

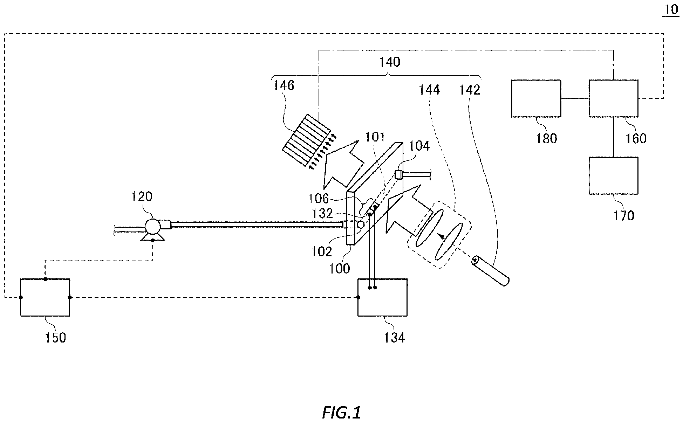

Patent Document 4 describes, in paragraph 0015, "Fig. 1 shows an embodiment of a gas sampling detection system useful for detecting the concentration of radicals within a gas stream. As shown, the gas sampling detection system 10 includes at least one plasma generator and/or radical gas generator 12 in fluid communication with at least one processing chamber 16 via at least one gas passage 14." and describes, in paragraph 0019, "As shown in Fig. 1, at least one sampling module 32 may be in fluid communication with the radical gas generator 12 via at least one sampling conduit 30."

### Prior Art Documents

### Patent Documents

Patent Document 1: Japanese Examined Patent Publication No. H6-17866
Patent Document 2: Japanese Patent Application Publication No. 2007-212145
Patent Document 3: Japanese Patent No. 7298746
Patent Document 4: Japanese Translation Publication of a PCT Rout Patent Application No. 2021-517638

### SUMMARY

In a first aspect of the present invention, there is provided a measurement device including a flow channel which includes a main inlet and a main outlet; a pump which supplies a fluid containing a radical precursor to the main inlet of the flow channel; a radical generation unit which generates a radical from the radical precursor in a radical generation region in the flow channel; and a measurement unit which measures a measurement value depending on a concentration of the radical at at least one measurement position which exists toward the main outlet relative to the radical generation region in the flow channel. The measurement position may exist toward the main inlet relative to the radical generation region. The at least one measurement position may be set regularly or irregularly along a flow direction of the fluid in a flow channel 101.

In the measurement device described above, the radical generation unit may generate the radical by applying at least one of a voltage, heat, light, or an electron beam to the fluid containing the radical precursor.

In any measurement device described above, the flow channel may include a first auxiliary inlet and the radical generation unit may generate the radical from the radical precursor by supplying an oxidizing agent to the first auxiliary inlet.

In any measurement device described above, the flow channel may include a second auxiliary inlet which is connected to the flow channel between the radical generation region and the at least one measurement position and introduces another fluid which reacts with the radical in the fluid to the flow channel.

In any measurement device described above, the measurement unit may include an inspection-light irradiation unit which irradiates the fluid with inspection light at the at least one measurement position, and a detector which detects the inspection light transmitted through the fluid at the at least one measurement position in the flow channel. The detector may measure light intensity of the detected inspection light.

In any measurement device described above, the at least one measurement position may include a plurality of measurement positions, and the measurement unit may measure the measurement value for each elapsed time from generation of the radical which corresponds to each of the plurality of measurement positions.

In any measurement device described above, the pump may change a flow velocity of the fluid in the flow channel, the flow velocity may include a plurality of flow velocities, and the measurement unit may measure the measurement value for each elapsed time from the generation of the radical which corresponds to each of the plurality of flow velocities different from each other.

Any measurement device described above may further include a calculation unit which calculates a lifetime of the radical, using the measurement value for each elapsed time from the generation of the radical.

Any measurement device described above may include an excitation light irradiation unit which irradiates the fluid with excitation light between the radical generation region and the at least one measurement position in the flow channel.

In a second aspect of the present invention, there is provided a measurement method including supplying a fluid containing a radical precursor to a main inlet in a flow channel which includes the main inlet and a main outlet; generating a radical from the radical precursor in a radical generation region in the flow channel; and measuring a measurement value depending on a concentration of the radical in at least one measurement position which exists toward the main outlet relative to the radical generation region in the flow channel.

An above-described summary does not necessarily list all features of the present invention. In addition, a sub-combination of these features may also fall within a scope of the invention.

### BRIEF DESCRIPTION OF THE DRAWINGS

Fig. 1 illustrates a configuration of a measurement device 10 according to the present embodiment.
Fig. 2 is a cross-sectional view of a first example of a flow channel 101.
Fig. 3 illustrates an operational flow in the measurement device 10 according to the present embodiment.
Fig. 4 is a cross-sectional view of a second example of the flow channel 101.
Fig. 5 is a perspective view of a third example of the flow channel 101.
Fig. 6 is a cross-sectional view of a fourth example of the flow channel 101.
Fig. 7 is a perspective view of a fifth example of the flow channel 101.
Fig. 8 is a cross-sectional view of a sixth example of the flow channel 101.
Fig. 9 illustrates an example of a computer 2200 in which a plurality of aspects of the present invention may be embodied entirely or partially.

### DESCRIPTION OF EXEMPLARY EMBODIMENTS

Although the present invention will be hereinafter described through an embodiment of the invention, the following embodiment is not intended to limit the invention according to the claims. In addition, not all combinations of features described in the embodiment are essential to a solution of the invention.

Fig. 1 illustrates a configuration of a measurement device 10 according to the present embodiment. The measurement device 10 is a device which generates a radical from a radical precursor and measures a concentration of a generated radical. Here, the radical precursor is a substance which may be turned into the radical by one or more stages of reactions. The measurement device 10 includes a distribution cell 100, a pump 120, a radical generation unit 132, a measurement unit 140, a measurement control unit 150, a calculation unit 160, a storage unit 170, and an output unit 180.

The distribution cell 100 is a cell in which a fluid containing the radical precursor and the radical flows. In the present embodiment, the distribution cell 100 has a plate-like structure. The distribution cell 100 may be formed by a light-transmitting material. The distribution cell 100 has a flow channel 101.

The flow channel 101 is a channel in which the fluid containing the radical precursor and the radical flows. The flow channel 101 may have a certain cross-sectional area. The flow channel 101 may have a polygonal or circular cross-section. The flow channel 101 may have a rectangular or square cross-section. The flow channel 101 includes a main inlet 102, a main outlet 104, a radical generation region 106, and one or more measurement positions.

The main inlet 102 is an inlet for supplying a fluid containing the radical precursor to the flow channel 101. The main outlet 104 is an outlet for discharging the measured fluid out of the flow channel 101. The main outlet 104 may be connected to a flow channel for discharge. Alternatively, the main outlet 104 may be connected to the main inlet 102. That is, the fluid may be supplied to the main inlet 102 repeatedly after exiting from the main outlet 104. In this case, the measurement device 10 can repeatedly measure the radical discharged from the main outlet 104. As used herein, for the sake of convenience, "a main path" is defined as a path in the flow channel 101 for introducing the fluid containing the radical precursor, performing a measurement of the radical, and discharging the measured fluid, and "the main inlet 102" and "the main outlet 104" are defined as an inlet and outlet relating to the main path, for the sake of convenience of description. Accordingly, the terms "main inlet" and "main outlet" are not intended to limit a magnitude relationship between a cross-sectional area of a flow channel of "the main inlet" and "the main outlet" and that of "an auxiliary inlet" and "an auxiliary outlet" described below, a magnitude relationship between a merging/diverting angle of a merging/diverting section of "the main inlet" and "the main outlet" and that of "the auxiliary inlet" and "the auxiliary outlet", or the like.

The radical generation region 106 is a region in the flow channel 101 for generating the radical from the radical precursor. The radical generation region 106 exists between the main inlet 102 and the main outlet 104 in the flow channel 101.

A measurement position is a position in the flow channel 101 at which a measurement value depending on a radical concentration is measured. The measurement position exists toward the main outlet 104 relative to the radical generation region 106 in the flow channel 101. In addition to this, the measurement position may exist toward the main inlet 102 relative to the radical generation region 106 for a baseline measurement.

The pump 120 is connected to the main inlet 102. The pump 120 supplies the main inlet 102 in the flow channel 101 with the fluid containing the radical precursor. The pump 120 may be a syringe pump or a diaphragm pump which has a relatively low pulsation. The pump 120 may be provided with a damper located between the pump 120 and the main inlet 102, which reduces a pulsation of the pump 120.

The radical generation unit 132 generates the radical from the radical precursor in the radical generation region 106 in the flow channel 101. The radical generation unit 132 may generate the radical by applying at least one of a voltage, heat, light, or an electron beam to the fluid containing the radical precursor. In the present embodiment, the radical generation unit 132 generates the radical by applying the voltage to the radical generation region 106 in the flow channel 101.

Alternatively, the radical generation unit 132 may generate the radical by applying the heat to the fluid containing the radical precursor, using at least one of a microheater, an electrically-heated wire, an induction heater, microwave heating, or a laser. The radical generation unit 132 may generate the radical by supplying an oxidizing agent to the fluid containing the radical precursor.

When the radical generation unit 132 applies the voltage, the measurement device 10 includes a current/voltage supply unit 134. The current/voltage supply unit 134 is connected to the radical generation unit 132. The current/voltage supply unit 134 supplies at least one of a current or a voltage to the radical generation unit 132 to control the voltage applied to the fluid containing the radical precursor by the radical generation unit 132. The current/voltage supply unit 134 may be at least one of a potentiostat or a galvanostat.

The measurement unit 140 measures the measurement value depending on the concentration of the radical at the one or more measurement positions. Here, the one or more measurement positions may be set regularly or irregularly along a flow direction of the fluid in the flow channel 101. When a plurality of measurement positions exist, the measurement unit 140 measures the measurement value for each elapsed time from generation of the radical which corresponds to each of the plurality of measurement positions. The measurement unit 140 may measure the measurement value including inspection-light intensity. The measurement unit 140 includes an inspection-light irradiation unit 142, a luminous flux adjustment unit 144, and one or more detectors 146.

The inspection-light irradiation unit 142 includes any light source such as a semiconductor laser. The inspection-light irradiation unit 142 irradiates the fluid at the one or more measurement positions with inspection light. The inspection-light irradiation unit 142 radiates the inspection light which includes light at a wavelength absorbed by the radical to be measured. The inspection-light irradiation unit 142 may radiate the inspection light which includes light with one or more wavelengths. When the inspection-light irradiation unit 142 radiates the inspection light including a plurality of wavelengths, the measurement device 10 may measure a plurality of substances simultaneously.

The luminous flux adjustment unit 144 is arranged on an optical path of the inspection light. The luminous flux adjustment unit 144 is arranged between the measurement position and the inspection-light irradiation unit 142. The luminous flux adjustment unit 144 adjusts a diameter of the inspection light such that the inspection light is radiated onto the measurement position. When the flow channel 101 includes a plurality of measurement positions, the luminous flux adjustment unit 144 may adjust the diameter of the inspection light such that all of the plurality of measurement positions are irradiated uniformly.

A detector 146 is arranged on the optical path of the inspection light. The detector 146 is arranged on an opposite side of the inspection-light irradiation unit 142 relative to the measurement position. When a plurality of detectors 146 exist, the plurality of detectors 146 may be arranged in a row along the flow direction of the fluid in the flow channel 101. The detector 146 detects the inspection light transmitted through the fluid at at least one measurement position in the flow channel 101. The detector 146 measures light intensity of the detected inspection light, or the inspection-light intensity. Since the inspection light includes light at a wavelength absorbed by the radical, the inspection-light intensity decreases when the radical concentration in the fluid is high, and the inspection-light intensity increases when the radical concentration in the fluid decreases.

The measurement control unit 150 is connected to the pump 120, the current/voltage supply unit 134, and the calculation unit 160. The measurement control unit 150 controls an operation of the pump 120 and the current/voltage supply unit 134.

The calculation unit 160 is connected to the detector 146 and the storage unit 170. The calculation unit 160 calculates a lifetime of the radical, using the measurement value for each elapsed time from the generation of the radical. The calculation unit 160 receives a measurement value at a corresponding measurement position from the detector 146. The calculation unit 160 may receive the inspection-light intensity at the corresponding measurement position from the detector 146. The calculation unit 160 receives information on a flow rate in the flow channel 101 from the measurement control unit 150. The calculation unit 160 writes measurement data to the storage unit 170, which includes at least one of the measurement value received from the detector 146, the information on the flow rate received from the measurement control unit 150, or information obtained by processing these kinds of information by the measurement control unit 150.

The storage unit 170 stores the measurement data. The storage unit 170 may be an electronic storage medium, a magnetic storage medium, an optical storage medium, an electromagnetic storage medium, or a semiconductor storage medium.

The output unit 180 is connected to the calculation unit 160. The output unit 180 outputs the lifetime of the radical calculated by the calculation unit 160. At least one of the measurement control unit 150, the calculation unit 160, the storage unit 170, or the output unit 180 may be a computer such as a personal computer, or PC, a tablet computer, a smartphone, a workstation, a server computer, or a general-purpose computer, and may be a computer system in which a plurality of computers are connected. Such computer system is also a computer in a broad sense. In addition, at least one of the measurement control unit 150, the calculation unit 160, the storage unit 170, or the output unit 180 may be implemented by one or more virtual computer environments which are executable in the computer. Alternatively, at least one of the measurement control unit 150, the calculation unit 160, the storage unit 170, or the output unit 180 may be a special-purpose computer designed for a measurement of the radical concentration, or may be special-purpose hardware realized by a dedicated circuit.

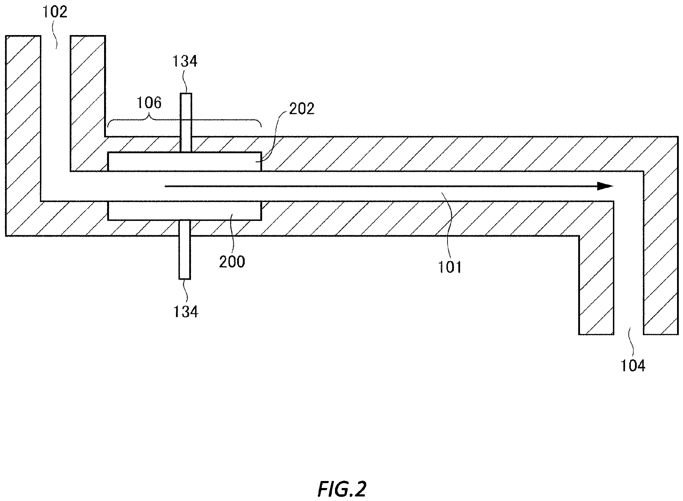

Fig. 2 is a cross-sectional view of a first example of the flow channel 101. In the example of the present illustration, the radical generation unit 132 including a pair of a first electrode 200 and a second electrode 202 is arranged in the radical generation region 106 in the flow channel 101. The first electrode 200 is arranged on an inner wall surface of the flow channel 101, and the second electrode 202 is arranged on the inner wall surface of the flow channel 101 opposite to the first electrode 200. The pair of the first electrode 200 and the second electrode 202 is connected to the current/voltage supply unit 134, and supplied with at least one of the current or the voltage from the current/voltage supply unit 134. The first electrode 200 and the second electrode 202 have different polarities, with one functioning as an anode and another as a cathode. The radical generation unit 132 may accelerate the radical precursor by applying the voltage to the radical precursor, and generate the radical by colliding each radical precursor with one another to cause ionization.

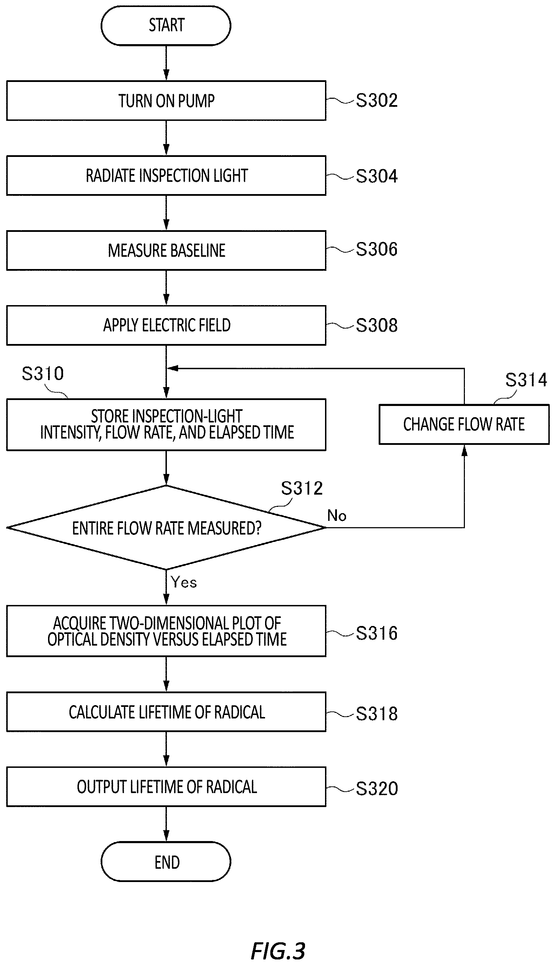

Fig. 3 illustrates the operational flow in the measurement device 10 according to the present embodiment. In S302, or a step 302, the measurement control unit 150 turns on the pump 120 to cause the pump 120 to start an operation. In this way, the pump 120 continuously supplies the fluid containing the radical precursor to the flow channel 101. The pump 120 may supply the fluid containing the radical precursor at a predetermined ratio, to the flow channel 101.

In S304, the inspection-light irradiation unit 142 irradiates the one or more measurement positions in the flow channel 101 with the inspection light. The measurement control unit 150 controls the current/voltage supply unit 134 not to supply the current and the voltage to the radical generation unit 132. In this case, since the voltage is not applied to the radical generation region 106, the fluid at each of the measurement positions does not contain the radical. In S306, each of the one or more detectors 146 detects the intensity of the inspection light passing through the fluid at each of the one or more measurement positions. The calculation unit 160 writes the inspection-light intensity detected by each of the one or more detectors 146 to the storage unit 170 as a baseline.

In S308, the measurement control unit 150 applies the voltage to the fluid in the radical generation region 106 by instructing the current/voltage supply unit 134 to supply the current or the voltage to the radical generation unit 132. In this way, the radical generation unit 132 generates the radical from the radical precursor contained in the fluid.

In S310, the inspection-light irradiation unit 142 irradiates the flow channel 101 with the inspection light. Each of the one or more detectors 146 detects the intensity of the inspection light passing through the fluid at each of the corresponding measurement positions. The calculation unit 160 receives the intensity of the inspection light detected by each detector 146, from each of the one or more detectors 146.

The calculation unit 160 acquires positional information of each of the measurement positions, the inspection-light intensity at each of the measurement positions, and the flow rate of the fluid in the flow channel 101. Here, the calculation unit 160 may store the positional information of each of the measurement positions in advance, or may read the positional information of each of the measurement positions from the storage unit 170. The positional information may be information on a distance from an end of the radical generation region 106 on a side of the main outlet 104 to each of the measurement positions.

The calculation unit 160 receives the information on the flow rate of the fluid from the measurement control unit 150. The flow rate may represent a volume of the fluid flowing per unit time.

Based on the distance from the radical generation region 106 to each of the measurement positions and the flow rate, the calculation unit 160 calculates an elapsed time for the fluid to travel from the radical generation region 106 to each of the measurement positions, namely an elapsed time from the generation to the measurement of the radical. For example, when the flow rate represents the volume of the fluid flowing per unit time, the calculation unit 160 may calculate the elapsed time by computing (a cross-sectional area of the flow channel 101)×(the distance from the radical generation region 106 to the measurement position)/(the flow rate of the fluid). The calculation unit 160 stores the measurement data including the inspection-light intensity, the flow rate of the fluid, and the elapsed time at each of the one or more measurement positions in the storage unit 170.

In S312, the measurement control unit 150 determines whether the measurement has been completed for an entire flow rate for which the inspection-light intensity is to be measured. When the measurement control unit 150 determines that the measurement has not been completed for the entire flow rate, namely No in S312, the measurement device 10 advances the process to S314. In S314, the measurement control unit 150 controls the pump 120. The pump 120 changes a flow velocity of the fluid in the flow channel 101 such that the flow velocity of the fluid becomes a value corresponding to the flow rate to be measured next.

In S310 after returning from S314, the inspection-light irradiation unit 142 irradiates the flow channel 101 through which the fluid with the changed flow rate is flowing, with the inspection light. Each of the one or more detectors 146 detects the intensity of the inspection light passing through the fluid at each of the corresponding measurement positions. The calculation unit 160 receives the intensity of the inspection light detected by each detector 146, from each of the one or more detectors 146. The calculation unit 160 receives information on the changed flow rate of the fluid from the measurement control unit 150, and calculates the elapsed time at each of the one or more measurement positions. The calculation unit 160 stores the measurement data including the inspection-light intensity, the flow rate of the fluid, and the elapsed time at each of the one or more measurement positions in the storage unit 170.

When the measurement control unit 150 determines that the measurement has been completed for the entire flow rate, namely Yes in S312, the measurement device 10 advances the process to S316. In this case, it means that the measurement unit 140 has measured the measurement value for each elapsed time from the generation of the radical which corresponds to each of a plurality of flow velocities different from each other. In S316, the calculation unit 160 calculates an optical density from the inspection-light intensity stored in the storage unit 170. The calculation unit 160 acquires a two-dimensional plot of the calculated optical density versus the elapsed time.

In S318, the calculation unit 160 calculates the lifetime of the radical based on the two-dimensional plot obtained in S316. The calculation unit 160 may calculate a time constant which represents the lifetime of the radical, by fitting an optimal function which approximates the two-dimensional plot obtained in S316 to the two-dimensional plot. The optimal function may be an exponential function. When the exponential function is fitted to the two-dimensional plot, the time constant may be calculated based on the obtained exponential function. For example, when the exponential function expressed by x = x₀exp(-t/τ) for time t, where x₀ is any constant, is obtained by fitting, the time constant of the radical is τ. Alternatively, the calculation unit 160 may calculate a half-life of the radical as the lifetime of the radical. In S320, the output unit 180 outputs the lifetime of the radical calculated by the calculation unit 160.

According to the measurement device 10 described above, since the lifetime of the radical is calculated based on the inspection-light intensity for each of the elapsed times different from each other, it is possible to measure the lifetime of the radical with an extended lifetime in a short time. In addition, since the above-described measurement device 10 has a simple system configuration, it is possible to perform an experiment with high reproducibility. Furthermore, according to the measurement device 10 described above, since the flow rate of the fluid can be changed, even when only one measurement position and one corresponding detector 146 are provided, it is possible to measure the radical after a different elapsed time by changing the flow rate. In this case, the measurement device 10 has a less expensive configuration, since it includes only one detector 146.

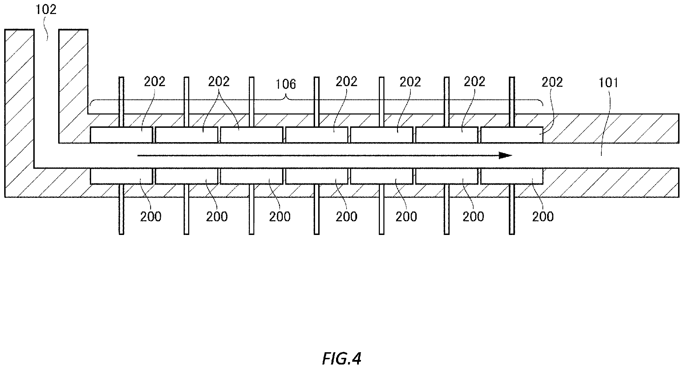

Fig. 4 is a cross-sectional view of a second example of the flow channel 101. In the example of the present illustration, a plurality of pairs of the first electrodes 200 and the second electrodes 202 are arranged in the radical generation region 106 in the flow channel 101 along the flow direction of the fluid in the flow channel 101. The first electrode 200 and the second electrode 202 in each pair may take a similar arrangement and configuration to the first electrode 200 and the second electrode 202 in Fig. 2. The first electrode 200 and the second electrode 202 are each connected to the current/voltage supply unit 134, and each pair is supplied with at least one of the current or the voltage by the current/voltage supply unit 134. The measurement device 10 including the flow channel 101 of the present illustration may control the generated amount of the radical by changing a number of the pairs of the first electrode 200 and the second electrode 202 to which at least one of the current or the voltage is supplied by the current/voltage supply unit 134.

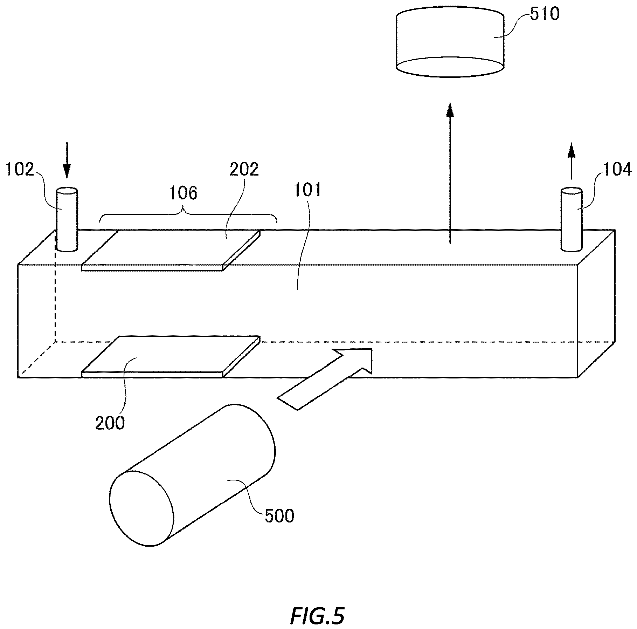

Fig. 5 is a perspective view of a third example of the flow channel 101. In the example of the present illustration, the measurement device 10 further includes an excitation light irradiation unit 500, and includes one or more detectors 510 instead of the one or more detectors 146. The excitation light irradiation unit 500 irradiates the fluid with excitation light between the radical generation region 106 in which the first electrode 200 and the second electrode 202 are arranged and the one or more measurement positions in the flow channel 101. The excitation light irradiation unit 500 may radiate an ultraviolet ray as the excitation light. The substance irradiated with the excitation light, namely a measured substance, becomes an excited state, and emits light in a course of returning to a ground state. The measured substance may be the radical contained in the fluid, or may be a substance other than the radical which interacts with the radical contained in the fluid.

A detector 510 is connected to the calculation unit 160. The detector 510 detects the light emitted from the measured substance. The detector 510 may be provided in a location away from the optical path of the excitation light, so as not to detect the excitation light. Alternatively, the detector 510 may be provided with a filter located between the detector 510 and the measurement positions in the flow channel 101 and may separate the excitation light from emitted light, so as not to detect the excitation light. In this case, the detector 510 may be provided on the optical path of the excitation light. When a plurality of detectors 510 exist, the plurality of detectors 510 may be arranged in a row along the flow direction of the fluid in the flow channel 101. In the example of the present illustration, the detector 510 detects the light emitted perpendicularly to the optical path of the excitation light.

The calculation unit 160 receives emitted light intensity detected by each detector 510, from each of the one or more detectors 510. The calculation unit 160 receives positional information of each measurement position from the storage unit 170. The positional information of each measurement position may be information on a distance from a position in the flow channel 101 which is irradiated with the excitation light by the excitation light irradiation unit 500 and each measurement position. The calculation unit 160 calculates the elapsed time based on information on the positional information of each measurement position and the flow rate of the fluid. The calculation unit 160 may calculate the elapsed time with a method similar to S310 in Fig. 3. The measurement control unit 150 may perform a process similar to S312 in Fig. 3. The calculation unit 160 acquires a two-dimensional plot of the emitted light intensity versus the elapsed time. The calculation unit 160 calculates the lifetime of the excited state of the measured substance based on the two-dimensional plot of the emitted light intensity versus the elapsed time. The calculation unit 160 may calculate the lifetime of the excited state of the measured substance with a method similar to S318 in Fig. 3. According to the measurement device 10 including the flow channel 101 described above, it is possible to measure the lifetime of the excited state of the measured substance based on a change in the light emitted by the measured substance.

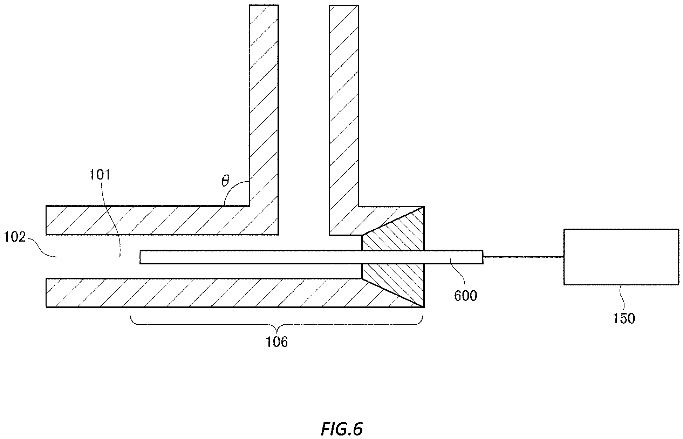

Fig. 6 is a cross-sectional view of a fourth example of the flow channel 101. In the example of the present illustration, the flow channel 101 has a bent shape. In addition, the measurement device 10 includes a microheater 600 instead of the radical generation unit 132 and the current/voltage supply unit 134 in Fig. 1. The microheater 600 is connected to and controlled by the measurement control unit 150. The microheater 600 generates the radical by applying the heat to the fluid containing the radical precursor in the radical generation region 106 in the flow channel 101. A pressure loss due to a collision of the fluid with the wall surface of the flow channel 101 may be suppressed by making an angle θ between an inflow direction and an outflow direction of the fluid in a bent section in the flow channel 101 closer to 180°.

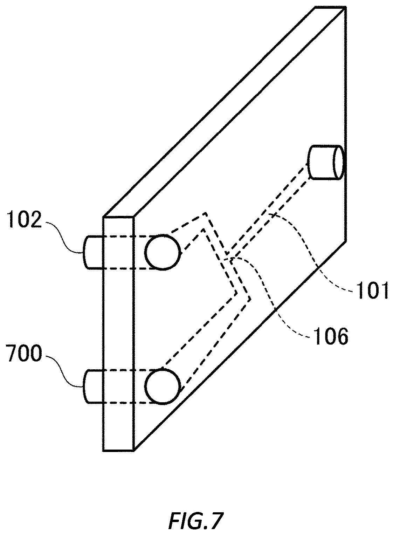

Fig. 7 is a perspective view of a fifth example of the flow channel 101. In the example of the present illustration, the flow channel 101 is formed in a Y-shape and includes the main inlet 102 and a first auxiliary inlet 700. The radical generation unit 132 generates the radical from the radical precursor by supplying the oxidizing agent to the first auxiliary inlet 700. The radical generation unit 132 may supply the oxidizing agent to the first auxiliary inlet 700 and cause the oxidizing agent to merge with the fluid containing the radical precursor supplied from the main inlet 102 in the radical generation region 106 to oxidize the radical precursor. The radical generation unit 132 may supply hydrogen peroxide or hydrogen peroxide bromide as the oxidizing agent.

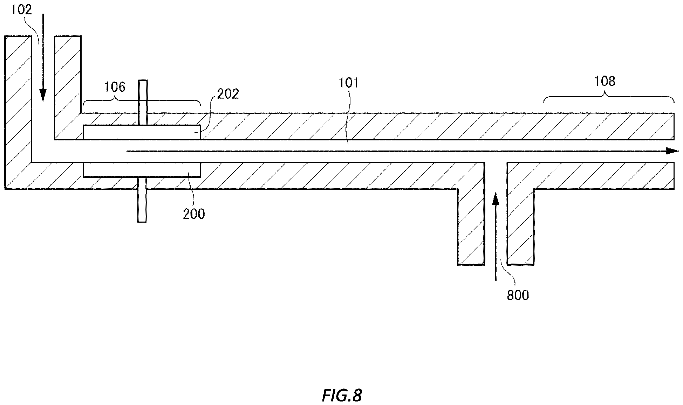

Fig. 8 is a cross-sectional view of a sixth example of the flow channel 101. In the example of the present illustration, the flow channel 101 includes a second auxiliary inlet 800 between the radical generation region 106 and the one or more measurement positions. The second auxiliary inlet 800 may introduce another fluid which reacts with the radical in the fluid to the flow channel 101. The second auxiliary inlet 800 may introduce a fluid including a substance which reacts with the radical in the fluid, as the another fluid which reacts with the radical in the fluid, to the flow channel 101.

The measurement device 10 including the flow channel 101 in the present illustration acquires a two-dimensional plot of the optical density versus the elapsed time with a method shown in S310 to S316 in Fig. 3. Here, the positional information of each measurement position may be information on a distance from a connected position between the flow channel 101 and the second auxiliary inlet 800 to each measurement position. According to the measurement device 10 including the flow channel 101 described above, since the radical generated in the radical generation region 106 may be reacted with the another fluid introduced from the second auxiliary inlet 800 to measure the concentration of the radical for each elapsed time from a start of a reaction, it is possible to analyze the reaction using the radical.

Various embodiments of the present invention may be described with reference to a flowchart and a block diagram whose block may represent (1) a stage of a process in which an operation is executed or (2) a section of a device responsible for executing the operation. A particular stage and section may be implemented by a dedicated circuit, a programmable circuit supplied together with a computer-readable instruction stored on a computer-readable medium, and/or a processor supplied together with the computer-readable instruction stored on the computer-readable medium. The dedicated circuit may include a digital and/or analog hardware circuit and may include an integrated circuit, or IC, and/or a discrete circuit. The programmable circuit may include a reconfigurable hardware circuit including logical AND, logical OR, logical XOR, logical NAND, logical NOR, and another logical operation, a memory element or the like such as a flip-flop, a register, a field programmable gate array, or FPGA, a programmable logic array, or PLA, or the like.

The computer-readable medium may include any tangible device that may store an instruction to be executed by an appropriate device, and as a result, the computer-readable medium including an instruction stored thereon will include a product including the instruction that may be executed to create means for executing the operation specified in the flowchart or the block diagram. Examples of the computer-readable medium may include an electronic storage medium, a magnetic storage medium, an optical storage medium, an electromagnetic storage medium, a semiconductor storage medium, or the like. More specific examples of the computer-readable medium may include a floppy (registered trademark) disk, a diskette, a hard disk, a random access memory, or RAM, a read-only memory, or ROM, an erasable programmable read-only memory, or EPROM or flash memory, an electrically erasable programmable read-only memory, or EEPROM, a static random access memory, or SRAM, a compact disc read-only memory, or CD-ROM, a digital versatile disk, or DVD, a Blu-ray (registered trademark) disk, a memory stick, an integrated circuit card, or the like.

The computer-readable instruction may include an assembler instruction, an instruction-set-architecture, or ISA instruction, a machine instruction, a machine-dependent instruction, a microcode, a firmware instruction, state-setting data, or either a source code or an object code described in any combination of one or more programming languages, including an object-oriented programming language such as Smalltalk (registered trademark), JAVA (registered trademark), C++, or the like, and a conventional procedural programming language such as a "C" programming language or a similar programming language.

The computer-readable instruction may be provided for a processor or programmable circuit of a programmable data processing device, such as a general-purpose computer, special purpose computer, or another computer, locally or via a local area network, or LAN, a wide area network, or WAN, such as the Internet, or the like to execute the computer-readable instruction to create means for executing the operation specified in the flowchart or the block diagram. Examples of the processor include a computer processor, a processing unit, a microprocessor, a digital signal processor, a controller, a microcontroller, or the like.

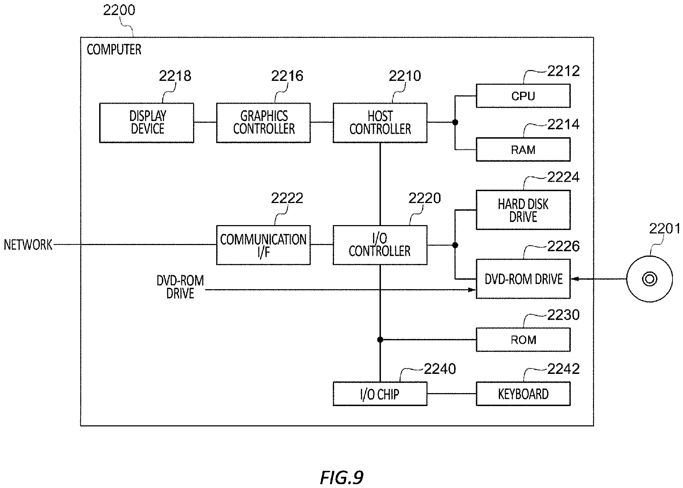

Fig. 9 illustrates an example of a computer 2200 in which a plurality of aspects of the present invention may be embodied entirely or partially. A program installed in the computer 2200 may cause the computer 2200 to function as an operation associated with a device according to the embodiment of the present invention or as one or more sections of the device, or may cause the operation or the one or more sections to be executed, and/or may cause the computer 2200 to execute a process according to the embodiment of the present invention or a stage of the process. Such a program may be executed by a CPU 2212 to cause the computer 2200 to execute a particular operation associated with some or all of the blocks in the flowchart and the block diagram described herein.

The computer 2200 according to the present embodiment includes the CPU 2212, a RAM 2214, a graphics controller 2216, and a display device 2218, which are interconnected by a host controller 2210. The computer 2200 also includes an input/output unit such as a communication interface 2222, a hard disk drive 2224, a DVD-ROM drive 2226, and an IC card drive, which is connected to the host controller 2210 via an input/output controller 2220. The computer also includes a legacy input/output unit such as an ROM 2230 and a keyboard 2242, which is connected to the input/output controller 2220 via an input/output chip 2240.

The CPU 2212 operates according to a program stored in the ROM 2230 and the RAM 2214, thereby controlling each unit. The graphics controller 2216 acquires image data generated by the CPU 2212 in a frame buffer or the like provided in the RAM 2214 or in itself and causes the image data to be displayed on the display device 2218.

The communication interface 2222 communicates with another electronic device via a network. The hard disk drive 2224 stores a program and data used by the CPU 2212 in the computer 2200. The DVD-ROM drive 2226 reads a program or data from a DVD-ROM 2201 and provides the program or the data to the hard disk drive 2224 via the RAM 2214. The IC card drive reads a program and data from the IC card, and/or writes the program and the data to the IC card.

The ROM 2230 stores therein a boot program or the like executed by the computer 2200 at a time of activation, and/or a program which depends on a hardware of the computer 2200. The input/output chip 2240 may also connect various input/output units to the input/output controller 2220 via a parallel port, a serial port, a keyboard port, a mouse port, or the like.

A program is provided by a computer-readable medium such as the DVD-ROM 2201 or the IC card. The program is read from the computer-readable medium, installed in the hard disk drive 2224, the RAM 2214, or the ROM 2230 which is also an example of the computer-readable medium, and executed by the CPU 2212. The information processing described in these kinds of the program is read by the computer 2200, and provides cooperation between the program and the various types of hardware resources described above. A device or method may be configured by realizing an operation or processing of information according to use of the computer 2200.

For example, when communication is executed between the computer 2200 and an external device, the CPU 2212 may execute a communication program loaded in the RAM 2214 and instruct the communication interface 2222 to perform communication processing based on processing described in the communication program. Under control of the CPU 2212, the communication interface 2222 reads transmission data stored in a transmission buffer processing region provided in a recording medium such as the RAM 2214, the hard disk drive 2224, the DVD-ROM 2201, or the IC card, transmits the read transmission data to the network, or writes reception data received from the network in a reception buffer processing region or the like provided on the recording medium.

In addition, the CPU 2212 may cause the RAM 2214 to read all or a necessary part of a file or database stored in an external recording medium such as the hard disk drive 2224, the DVD-ROM drive 2226, or DVD-ROM 2201, the IC card, or the like, and execute various types of processing on data on the RAM 2214. Then, the CPU 2212 writes the processed data back in the external recording medium.

Various types of information such as various types of a program, data, a table, and a database may be stored in the recording medium and subjected to information processing. The CPU 2212 may execute, on the data read from the RAM 2214, various types of processing including various types of an operation, information processing, conditional judgment, conditional branching, unconditional branching, information retrieval/replacement, or the like described throughout the present disclosure and specified by an instruction sequence of the program, and writes a result back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified which matches a condition, read the attribute value of the second attribute stored in the entry, thereby acquiring the attribute value of the second attribute associated with the first attribute meeting a predetermined condition.

The program or software module described above may be stored in a computer-readable medium on or near the computer 2200. In addition, the recording medium such as a hard disk or a RAM provided in a server system connected to a dedicated communication network or the Internet may be used as a computer-readable medium, thereby providing a program to the computer 2200 via the network.

While the present invention has been described hereinabove by using the embodiment, a technical scope of the present invention is not limited to a scope of the above-described embodiment. It is apparent to persons skilled in the art that various alterations or improvements may be made to the embodiment described above. It is apparent from description of the claims that the embodiment to which such alterations or improvements are made may also be included in the technical scope of the present invention.

It should be noted that each process of the operations, procedures, steps, stages, and the like performed by the device, system, program, and method shown in the claims, specification, and drawings may be executed in any order as long as the order is not particularly explicitly indicated by "prior to", "before", or the like and as long as an output from a previous process is not used in a later process. Even when the operational flow in the claims, specification, and drawings is described using phrases such as "first", "next", or the like for the sake of convenience, it does not necessarily mean that the process must be performed in this order.

### EXPLANATION OF REFERENCES

10: measurement device;
100: distribution cell;
101: flow channel;
102: main inlet;
104: main outlet;
106: radical generation region;
120: pump;
132: radical generation unit
134: current/voltage supply unit;
140: measurement unit;
142: inspection-light irradiation unit
144: luminous flux adjustment unit
146: detector;
150: measurement control unit;
160: calculation unit;
170: storage unit;
180: output unit;
200: first electrode;
202: second electrode;
500: excitation light irradiation unit;
510: detector;
600: microheater;
700: first auxiliary inlet;
800: second auxiliary inlet;
2200: computer;
2201: DVD-ROM;
2210: host controller;
2212: CPU;
2214: RAM;
2216: graphics controller;
2218: display device;
2220: input/output controller;
2222: communication interface;
2224: hard disk drive;
2226: DVD-ROM drive;
2230: ROM;
2240: input/output chip;
2242: keyboard.

## Claims

1. A measurement device comprising:
a flow channel which comprises a main inlet and a main outlet;
a pump which supplies a fluid containing a radical precursor to the main inlet of the flow channel;
a radical generation unit which generates a radical from the radical precursor in a radical generation region in the flow channel; and
a measurement unit which measures a measurement value depending on a concentration of the radical at at least one measurement position which exists toward the main outlet relative to the radical generation region in the flow channel.

2. The measurement device according to claim 1, wherein the radical generation unit generates the radical by applying at least one of a voltage, heat, light, or an electron beam to the fluid containing the radical precursor.

3. The measurement device according to claim 1, wherein
the flow channel comprises a first auxiliary inlet, and
the radical generation unit generates the radical from the radical precursor by supplying an oxidizing agent to the first auxiliary inlet.

4. The measurement device according to any one of claims 1 to 3, wherein
the flow channel comprises a second auxiliary inlet which is connected to the flow channel between the radical generation region and the at least one measurement position and introduces another fluid which reacts with the radical in the fluid to the flow channel.

5. The measurement device according to any one of claims 1 to 4, wherein
the measurement unit comprises
an inspection-light irradiation unit which irradiates the fluid with inspection light at the at least one measurement position, and
a detector which detects the inspection light transmitted through the fluid at the at least one measurement position in the flow channel.

6. The measurement device according to any one of claims 1 to 5, wherein
the at least one measurement position comprises a plurality of measurement positions, and
the measurement unit measures the measurement value for each elapsed time from generation of the radical which corresponds to each of the plurality of measurement positions.

7. The measurement device according to any one of claims 1 to 6, wherein
the pump changes a flow velocity of the fluid in the flow channel,
the flow velocity comprises a plurality of flow velocities, and
the measurement unit measures the measurement value for each elapsed time from generation of the radical which corresponds to each of the plurality of flow velocities different from each other.

8. The measurement device according to claim 6 or 7, further comprising a calculation unit which calculates a lifetime of the radical, using the measurement value for each elapsed time from the generation of the radical.

9. The measurement device according to any one of claims 1 to 8, comprising an excitation light irradiation unit which irradiates the fluid with excitation light between the radical generation region and the at least one measurement position in the flow channel.

10. A measurement method comprising:
supplying a fluid containing a radical precursor to a main inlet in a flow channel which comprises the main inlet and a main outlet;
generating a radical from the radical precursor in a radical generation region in the flow channel; and
measuring a measurement value depending on a concentration of the radical in at least one measurement position which exists toward the main outlet relative to the radical generation region in the flow channel.
